(19) Europäisches Patentamt

European Patent Office

Office européen des brevets

(11) EP 1 066 993 A2

(12) **EUROPEAN PATENT APPLICATION**

(43) Date of publication:
10.01.2001 Bulletin 2001/02

(51) Int. Cl.⁷: $B60C\ 15/04$

(21) Application number: 00305408.7

(22) Date of filing: 28.06.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **29.06.1999 JP 18383099**

(71) Applicant:
**SUMITOMO RUBBER INDUSTRIES LTD.
Hyogo-ken (JP)**

(72) Inventor: **Ueyoko, Kiyoshi
Kobe-shi, Hyogo-ken (JP)**

(74) Representative:
**Stewart, Charles Geoffrey
Technical,
Dunlop Tyres Ltd.,
Fort Dunlop
Erdington, Birmingham B24 9QT (GB)**

(54) **Pneumatic tyre for 15-degree-taper rim**

(57) A pneumatic tyre comprises a pair of axially spaced bead portions (4) adapted for a 15-degree-taper rim, a bead core (5) disposed in each bead portion (4), and a carcass (6) turned up around the bead core (5). The bead core (5) is made of a single bead wire wound into a substantially polygonal cross sectional shape so that windings of the bead wire form radially piled-up wire arrays (L) which are inclined at an angle $\alpha$ of from 5 to 25 degrees with respect to the tyre axial direction (BL). The number (n) of windings of each wire array (L) gradually increases from a radially innermost wire array (L1) to a maximum wire array (LX) of which the number of windings (n-max) is maximum so that the polygonal cross sectional shape has a substantially trapezoidal region as a radially inner part. The width (W1) of the radially innermost wire array (L1) is in a range of from 0.4 to 0.7 times the width (W2) of the maximum wire array. The height (H) of the wire arrays measured from the radially innermost wire array (L1) to a radially outermost wire array (Lm) is in a range of from 0.8 to 2.0 times the width (W1) of the radially innermost wire array (L1).

**Fig.2**

Printed by Xerox (UK) Business Services
2.16.7 (HRS)/3.6

**Description**

The present invention relates to a pneumatic tyre for use with a 15-degree-taper rim and more particularly to an improved bead core being capable of improving bead durability.

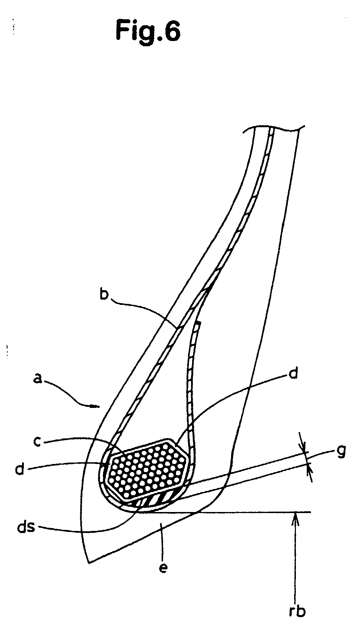

As shown in Fig.6, a pneumatic tyre is provided in each bead portion (a) with a bead core (d) to secure the bead portion on a bead seat of a wheel rim. Usually, the carcass (b) is turned up around the bead cores (d) to be secured thereto.

In tubeless tyres for heavy duty use such as truck/bus tyres mounted on a 15-degree-taper rim, a bead core (d) made of a steel wire (c) wound into a flattened hexagonal cross-sectional shape as shown in Fig.6 is widely used.

In this bead structure, during vulcanising the tyre, topping rubber of the carcass (b), bead core (d) and the like flows into a space (ds) under the bead core (d), and a relatively wide gap (g) is formed between the bead core bottom and carcass cords. Furthermore there is a long variation of the gap (g) in the tyre circumferential direction. Thus, the inside diameter (rd) of the carcass (b) is inconsistent and unstable, and when the tyre is mounted on a wheel rim, the compression between the bead core and the bead seat of the wheel rim varies widely. On the other hand, when the gap (g) is large, the thickness of rubber (e) between the bottom face of the bead portion and the carcass cords is small accordingly. If the thickness (e) is excessively decreased, the rubber is liable to break. Therefore, the bead durability is decreased.

In order to solve these problems, the present inventor studied and discovered that in heavy duty tyres, characteristics vary widely even for small structural changes in the bead core, and that the durability can be effectively improved by specifically limiting the shape of the bead core, and thus it became possible to improve the durability without substantial changes in the production facilities.

It is therefore, an object of the present invention to provide a pneumatic tyre for used with a 15-degree-taper rim in which, by specifically limiting the shape of the bead core, the above-mentioned problems, a occurrence of wide gap, a large variation thereof, and the like can be solved, and bead durability is effectively improved.

According to the present invention, a pneumatic tyre comprises a pair of axially spaced bead portions adapted for a 15-degree-taper rim, a bead core disposed in each of the bead portions, a carcass turned up around the bead core, the bead core made of a single bead wire wound into a polygonal cross sectional shape so that windings of the bead wire form radially piled-up wire arrays which are inclined at an angle of from 5 to 25 degrees with respect to the tyre axial direction, the number of windings of each wire array gradually increased from a radially innermost wire array to a maximum wire array of which the number of windings is maximum so that the above-mentioned polygonal cross sectional shape has a substantially trapezoidal region as a radially inner part, a width of the radially innermost wire array being in a range of from 0.4 to 0.7 times a width of the maximum wire array, and a height of the wire arrays measured from the radially innermost wire array to a radially outermost wire array being in a range of from 0.8 to 2.0 times the width of the radially innermost wire array.

Embodiments of the present invention will now be described by way of example in detail in conjunction with the accompanying diagrammatic drawings in which:

>Fig.1 is a cross sectional view of a tyre according to the present invention;
>Fig.2 is a cross sectional view of the bead portion thereof;
>Fig.3(A) is a cross sectional view of the bead core;
>Fig.3(B) is a cross sectional view of a bead core in which wire arrays are arranged in reverse order to that of Fig.3(A);

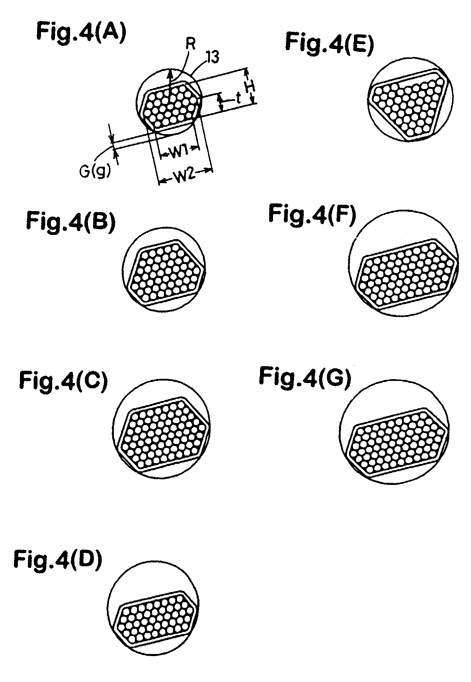

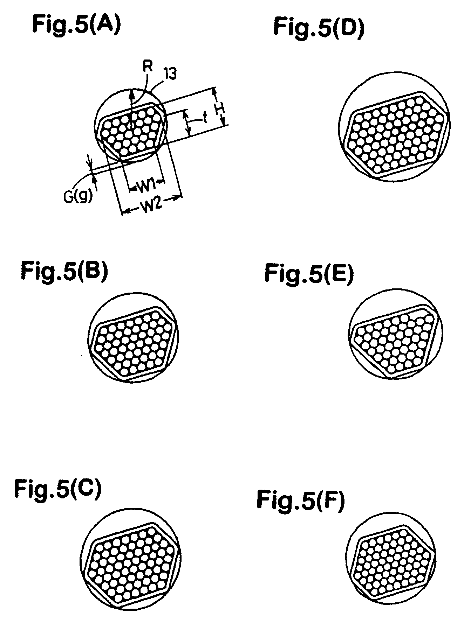

>Figs.4(A)-4(G) and 5(A)-5(F) are cross sectional views each showing a bead core; and
>Fig.6 is a cross sectional view of a conventional bead portion.

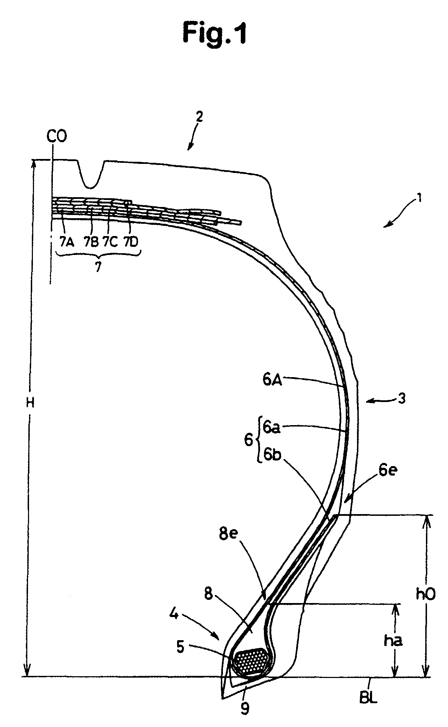

In Fig.1, a tyre 1 according to the present invention comprises a tread portion 2, a pair of axially spaced bead portions 4 each with a bead core 5 therein, a pair of sidewall portions 3 extending therebetween, a carcass 6 extending between the bead portions 4, and a belt 7 disposed radially outside the carcass 6 in the tread portion 2.

The carcass 6 comprises at least one ply 6A of cords arranged at an angle of 70 to 90 degrees with respect to the tyre equator CO, and extending between the bead portions 4 through the tread portion 2 and sidewall portions 3, and turned up around the bead core 5 in each bead portion 4 from the inside to the outside of the tyre to form a pair of turned up portions 6b and a main portion 6a therebetween. For the carcass cords, organic fibre cords, e.g. nylon, rayon, polyester, aromatic polyamide and the like, and steel cords can be used. In this example, the carcass 6 is composed of a single ply 6A of steel cords arranged at 90 degrees with respect to the tyre equator CO.

The belt 7 in this example is composed of four plies: a radially innermost first ply 7A of steel cords laid at an angle of from 50 to 70 degrees with respect to the tyre equator CO; and second to fourth plies 7B, 7C and 7D of steel cords laid at angles of not more than 30 degrees with respect to the tyre equator CO. In addition to the steel cords, organic fibre cords, e.g. nylon, polyester, rayon, aromatic polyamide and the like can be used for the belt cords.

Each of the bead portions 4 is provided between the carcass main portion 6a and turned up portion 6b with a bead apex 8 tapering radially outwards from the bead core 5. The bead apex 8 is made of rubber having a Shore (A) hardness of from 60 to 99 degrees. The height (ha) of the radially outer end 8e of the bead apex 8 is set in the angle of from 6 to 31 %, more preferably 8 to 22 %, still more preferably 8 to 14 % of the section height H of the tyre, each measured radially from the bead base line BL.

Here, the bead base line BL is an axial line drawn at the wheel rim diameter specified by JATMA in Japan, TRA in USA, ETRTO in Europe and the like.

The above-mentioned carcass turned up portion 6b extends radially outwardly beyond the radially outer end of 8e of the bead apex 8, and the outer end 6e thereof is positioned radially inward of the maximum tyre section width point. The height h0 of the outer end 6e from the bead base line BL is preferably 15 to 50 %, more preferably 20 to 40 % of the tyre section height H.

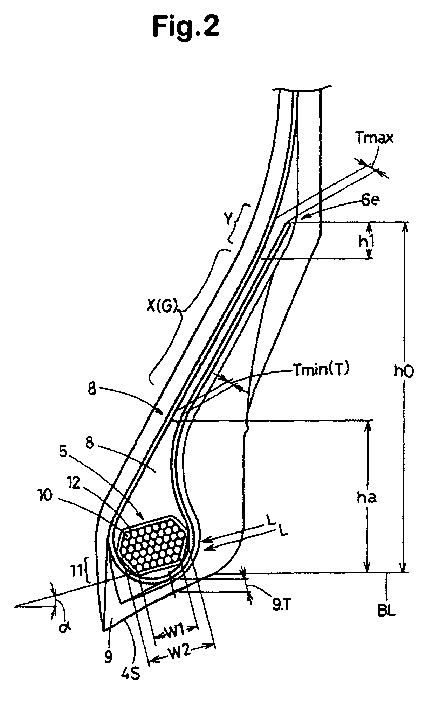

In this example, the axially inner surface of the bead apex 8 is substantially straight, and the axially outer surface thereof is concavely curved, and similarly thereto, a carcass ply portion adjacent to the axially inner surface is substantially straight, and a carcass ply portion adjacent to the axially outer surface is concavely curved. Further, as shown in Fig.2, on the radially outside of the outer end 8e of the bead apex 8, the turned up portion 6b adjoins the main portion 6a. And near the outer end 8e, an adjacent part X in which the cord spacing T between the turned up portion 6b and main portion 6a is minimum (Tmin) is formed. The minimum cord spacing Tmin is set in a range of from 0.15 to 7.0 times, preferably 0.15 to 5.0 times, more preferably 0.5 to 3.5 times, still more preferably 0.8 to 2.5 times the diameter of the carcass cords. Furthermore, a widening part Y is formed subsequently to the adjacent part X. In the widening part Y, the cord spacing T gradually increases from the radially outer end of the adjacent part X to the radially outer end 6e of the turned up portion 6b. The maximum cord spacing Tmax at the outer end 6e is in a range of more than 0.5 times but not more than 9.0 times, preferably in a range of from 1.0 to 6.0 times, more preferably 1.5 to 4.5 times the carcass cord diameter. Preferably, the widening part Y extends to have a height h1 in a range of from 0.1 to 0.9 times (in this example 0.2 times) the difference (h0-ha) in height between the outer end 6e and the outer end 8e. In the widening part Y, the cord spacing T is substantially linearly increased in this example. But, it is also possible to increase quadrically or the like.

By using the above explained relatively small bead apex 8, the compressive strain of the turned up portion 6b and heat generation in the bead portion can be reduced, and the tyre durability is thus increased.

If the minimum cord spacing Tmin is less than 0.15 times the carcass cord diameter, the strength of rubber against deformation becomes insufficient near the bead apex outer end 8e. If more than 7.0 times, the heat generation increases, and a separation failure is liable to start from a position near the outer end 8e.

As the parallel region G, in which the cord spacing is substantially constant, continues for a certain length, heat generation due to the sharing force between the turned-up portion and the main portion can be effectively decreased. Further, as the widening part Y is formed, cord separation train rubber and breakage of rubber at the outer end 6e of the turned up portion 6b can be prevented.

The bead core 5 is made of a single bead wire 10 wound into a polygonal cross sectional shape as shown in Fig.2.

For the material of the bead wire 10, hard steel materials, non-ferrous metal materials such as titanium alloy, organic materials such as aromatic polyamide and the like can be used. In this example, a hard steel wire is used for the material cast and strength.

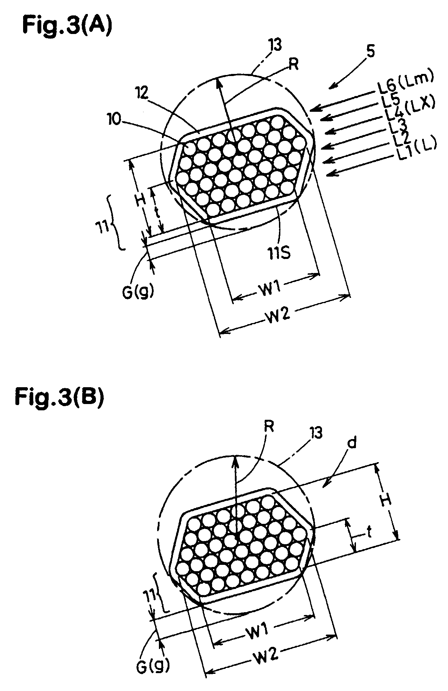

The windings of the bead wire 10 form a plurality of wire layer or arrays L (L1, L2, L3 --) as shown in Fig.3(A). In each wire array L, the windings are disposed side-by-side along a direction substantially parallel with the bead bottom 4S. This direction in which the array L is inclined is set at an angle $\alpha$ of from 5 to 25 degrees with respect to the tyre axial direction. Usually, this direction is set so as to become substantially parallel with the bead seat of the wheel rim when the tyre is mounted on the rim. However, in a free state not mounted on a rim, the bead bottom face 4S inclines at a slightly larger angle than the angle $\alpha$. The inclination is so determined.

The numbers (n) of windings of the wire arrays L gradually increases from the radially innermost wire array L1 to a radially outer maximum wire array LX in which the number (n) is maximum (nmax) so that the bead core 5 has a substantially trapezoidal region 11 as its radially inner part.

In the trapezoidal region 11 in this example, the increase in number (n) from the radially innermost wire array L1 to the maximum wire array LX is one by one.

The array width W1 of the radially innermost wire array L1 is set in a range of from 0.4 to 0.7 times, preferably 0.5 to 0.7 times the array width W2 of the maximum wire array LX. In this example, W1/W2 is 0.67.

The array height H measured from the radially inside of the radially innermost wire array L1 to the radially outside of the radially outermost wire array Lm is set in a range of from 0.8 to 2.0 times, preferably 0.9 to 1.7 times the array width W1. Thus, the ratio H/W1 is 0.8 to 2.0.

Here, the array width is measured in the widthwise direction or the above-mentioned direction at the angle $\alpha$ at which the array inclines. The array height is measured in the normal direction to the widthwise direction.

The total number nU of windings counted on the radially outside of the maximum wire array LX is preferably set in a range of less than 1.0 times, more preferably less than 0.8 times the number nL of windings counted on the radially inside of the maximum wire array LX. Preferably, the difference (m-nmax) of the number (m) of the wire arrays L from the number (nmax) of windings of the maximum wire array LX is set in a range of not less than 2.

If W1/W2 is less than 0.4, the contact pressure with the wheel rim becomes partially very high, and the bead durability decreases. If W1/W2 is more than 0.7, the gap (g) increases and the durability decreases.

If H/W1 is less than 0.8 or more than 2.0, it is difficult to improve the bead durability, and a futile increase in the bead core weight is brought about; also the compression between the bead core and the bead seat is liable to become insufficient.

Preferably, a thin wrapper 12 (in this embodiment, canvas) is wrapped around the bead core 5 to prevent the windings from loosening and directly contacting the carcass cords.

Further, as shown in Fig.2, the thickness 9T of chafer rubber 9, measured as a minimum distance from the bead bottom face 4S to the carcass cords, is preferably set in a range of not less than 2.5 mm.

In Figs.2 and 3(A), the bead core 5 has six wire arrays L1-L6, and the numbers n1-n6 of windings thereof are as follows: n1=6, n2=7, n3=8, n4=nmax=9 , n5=8, n6=7. Thus, the wire array L4 is the maximum wire array LX. Hereinafter, this structure is called "6x7x8x9x8x7" structure.

On the other hand, the above-mentioned gap (g) well corresponds to a gap (G) from a circumscribed circle 13, wherein the circumscribed circle 13 is drawn so as to circumscribe the trapezoidal region 11, more practically, so as to touch both ends of the radially innermost wire array L1 and both ends of the maximum wire array LX directly if there is no wrapper 12 or indirectly through the wrapper 12 if the wrapper 12 is provided as in the above-mentioned embodiment.

In connection with this, the trapezoidal region 11 in this embodiment is symmetrical. Thus, four vertexes can touch the circle 13. However, other vertexes of the bead core cross sectional shape are positioned within the circle 13 without touching the circle 13.

In Fig.3(A), such a circumscribed circle 13 is shown by a chain line.

Fig.3(B) shows a bead core (d) for comparison in which the number of windings is the same number of 45 as Fig.3(B), and the structure is 7x8x9x8x7x6, that is, the sequence is reversed. In this case, as readily known from the comparison with the former example, the gap G(g) increases.

Comparison Tests

Test tyres of size 11R22.5 (Truck/Bus radial tyre) having the same tyre structure shown in Fig.1 except for the bead core structure were made and the following tests were made. Test results are shown in Table 1.

(1) Water pressure test:

The test tyre was mounted on a standard wheel rim (15-degree-taper rim of size 22.5X8.25) and filled with water. Then, the water pressure was increased, and the water pressure at which the bead core was broken was measured. The results are indicated by an index based on Example tyre 1 being 100. The larger the index number, the better the strength.

(2) Heat generation test:

The test tyre mounted on the standard rim, inflated to 800 kPa and loaded with 9000 kg was run on a test drum at a speed of 20 km/h, and the temperature of the bead portion was measured every 1000 km. The average thereof is indicated by an index based on Example 1 being 100. The smaller the index number, the better the heat generation.

(3) Bead damage test:

The test tyre mounted on the standard rim, inflated to 1000 kPa and loaded with 9000 kg was run for 8000 km on the test drum at a speed of 20 km/h. Then, the tyre was cut-open inspected to check bead damage such as breakage of the rubber under the bead core. In Table 1, "X" mark means that damage was observed, and "O" mark means that no damage was found.

(4) Production efficiency:

In Table 1, "X" mark means that it was difficult to produce, and "O" mark means that there is no problem in producing the bead core and bead portion.

(5) Tyre weight:

The tyre weight is indicated by an index based on Example 1 being 100. The smaller the index number, the lighter the tyre weight.

In all the test tyres, the carcass was composed of a single ply of steel cords (3X0.2+7X0.23) arranged radially at 90 degrees with respect to the tyre equator. The cord count was 38/5cm under the bead core. The belt was composed of four plies of steel cords (3X0.20+6X0.35) laid at +67, +18, -18 and -18 degrees (inside to outside) with respect to the tyre equator. The cord count was 26/5cm.

The bead core was formed by winding a single hard-steel wire having a diameter of 1.55 mm, and a strip of rubberised canvas was wrapped around the bead core to completely cover the outside thereof. In Table 2, specifications of the bead cores used in the test tyres and those of additional examples are shown. In Table 2, the maximum distance from the radially inner side 11S of the bead core 5 including the wrapper 12 to the circumscribed circle 13 measured normally to the radially inner side 11S is shown as the gap G.

Table 1

| Tyre | Ref.1 | Ref.2 | Ref.3 | Ex.1 | Ex.2 |
|---|---|---|---|---|---|
| Bead core | A2 | A5 | A6 | B2 | B5 |
| Total number of windings | 45 | 44 | 45 | 45 | 45 |
| W1/W2 | 0.778 | 0.8 | 0.334 | 0.666 | 0.444 |
| H/W1 | 0.761 | 0.558 | 2.35 | 0.888 | 1.55 |
| Test results | | | | | |
| Water pressure | 100 | 99 | 100 | 100 | 100 |
| Bead heat generation | 102 | 110 | 108 | 100 | 100 |
| Bead damage | X | X | O | O | O |
| Production efficiency | O | O | X | O | O |
| Tyre weight | 100 | 99 | 100 | 100 | 100 |

Table 2

| Bead core | A1 | A2 | A3 | A4 | A5 | A6 | A7 |
|---|---|---|---|---|---|---|---|
| | Fig.4(A) | Fig.3(B) | Fig.4(B) | Fig.4(C) | Fig.4(D) | Fig.4(E) | Fig.4(F) |
| Wire diameter (mm) | 1.55 | 1.55 | 1.55 | 1.55 | 1.55 | 1.55 | 1.55 |
| Structure | 5x6x7x6x5 | 7x8x9x8x7x6 | 7x8x9x8x7x6x5 | 8x9x10x11x10x9x8x7 | 8x9x10x9x8x7 | 3x4x5x6x7x8x9x3 | 9x10x11x12x11x10x9 |
| Total number of windings | 29 | 45 | 50 | 72 | 44 | 45 | 72 |
| Array width W2 (mm) | 11.72 | 15.08 | 15.08 | 18.55 | 16.73 | 15.08 | 20.1 |
| Array width W1 (mm) | 8.38 | 11.73 | 11.73 | 13.4 | 13.4 | 5.03 | 15.08 |
| Array height H (mm) | 7.48 | 8.93 | 10.38 | 11.83 | 7.49 | 11.83 | 10.38 |
| W1/W2 | 0.715 | 0.778 | 0.778 | 0.722 | 0.8 | 0.334 | 0.75 |
| H/W1 | 0.892 | 0.761 | 0.885 | 0.883 | 0.558 | 2.35 | 0.688 |
| Height of Trapezoidal region t(mm) | 3.74 | 3.74 | 3.74 | 5.99 | 3.74 | 9.54 | 5.19 |
| Circumscribed circle Radius (mm) | 6.99 | 8.81 | 8.81 | 10.45 | 9.74 | 8.81 | 11.37 |
| Gap G (mm) | 1.48 | 2.33 | 2.33 | 2.52 | 2.78 | 0.4 | 2.96 |

Table 2 (continued)

| Bead core | B1 | B2 | B3 | B4 | B5 | B6 | B7 |
|---|---|---|---|---|---|---|---|
| | Fig.5(A) | Fig.3(A) | Fig.5(B) | Fig.5(D) | Fig.5(E) | Fig.5(C) | Fig.5(F) |
| Wire diameter (mm) | 1.55 | 1.55 | 1.55 | 1.55 | 1.55 | 1.55 | 1.55 |
| Structure | 4x5x6x7x6 | 6x7x8x9x8x7 | 5x6x7x8x9x8x7 | 7x8x9x10x11x10x9x8 | 4x5x6x7x8x9x6 | 6x7x8x9x10x9x8x7 | 7x8x9x10x9x8x7x6 |
| Total number of windings | 28 | 45 | 50 | 72 | 45 | 64 | 64 |
| Array width W2 (mm) | 11.73 | 15.08 | 15.08 | 18.53 | 15.08 | 16.75 | 16.75 |
| Array width W1 (mm) | 6.7 | 10.05 | 8.38 | 11.73 | 6.7 | 10.05 | 11.72 |
| Array height H (mm) | 7.48 | 8.93 | 10.38 | 11.83 | 10.38 | 11.83 | 11.83 |
| W1/W2 | 0.571 | 0.666 | 0.556 | 0.633 | 0.444 | 0.6 | 0.7 |
| H/W1 | 1.12 | 0.888 | 1.24 | 1.01 | 1.55 | 1.18 | 1.01 |
| Height of Trapezoidal region t(mm) | 5.19 | 5.19 | 6.64 | 6.64 | 8.09 | 6.64 | 5.19 |
| Circumscribed circle Radius (mm) | 6.92 | 8.65 | 8.59 | 10.34 | 8.65 | 9.42 | 9.54 |
| Gap G (mm) | 0.93 | 1.69 | 1.15 | 1.9 | 0.72 | 1.49 | 2.1 |

**Claims**

1. A pneumatic tyre comprising a pair of axially spaced bead portions (4) adapted for a 15-degree-taper rim, a bead core (5) disposed in each said bead portion (4), a carcass (6) turned up around the bead core (5), the bead core (5) comprising a single bead wire wound into a substantially polygonal cross sectional shape so that windings of the bead wire form radially piled-up wire arrays (L) which are inclined at an angle of from 5 to 25 degrees with respect to the tyre axial direction, characterised in that the number (n) of windings of each said wire array (L) gradually increase from a radially innermost wire array (L1) to a maximum wire array (LX) of which the number (n-max) of windings is a maximum so that said substantially polygonal cross sectional shape has a substantially trapezoidal region (11) as a radially inner part, a width (W1) of the radially innermost wire array (L1) being in a range of from 0.4 to 0.7 times a width (W2) of the maximum wire array (LX), and a height (H) of the wire arrays (L) measured from the radially innermost wire array (L1) to a radially outermost wire array (Lm) is in a range of from 0.8 to 2.0 times the width (W1) of the radially innermost wire array (L1).

2. A pneumatic tyre according to claim 1, characterised in that, from the radially innermost wire array (L1) to the maximum wire array (LX), the number of windings is increased one by one.

3. A pneumatic tyre according to claim 1 or 2, characterised in that the total number (nU) of windings counted on the radially outside of the maximum wire array (LX) is less than the total number (nL) of windings counted on the radially inside of the maximum wire array (LX) .

4. A pneumatic tyre according to claim 1, 2, or 3, characterised in that the total number of windings (nU) counted on the radially outside of the maximum wire array (LX) is in a range of less than 0.8 times the total number of windings (nL) counted on the radially inside of the maximum wire array (LX).

5. A pneumatic tyre according to claim 1, 2 or 3, characterised in that the number of windings of the radially innermost wire array (L1) is 4.

6. A pneumatic tyre according to claim 1, 2 or 3, characterised in that the number of windings of the radially innermost wire array (L1) is 5.

7. A pneumatic tyre according to claim 1, 2 or 3, characterised in that the number of windings of the radially innermost wire array (L1) is 6.

8. A pneumatic tyre according to claim 1, 2 or 3, characterised in that the number of windings of the radially innermost wire array (L1) is 7.

9. A pneumatic tyre according to claim 1, characterised in that the sequence of the numbers of windings from the radially innermost wire array (L1) to a radially outermost wire array (Lm) is one of the followings:

   4x5x6x7x6;
   6x7x8x9x8x7;
   5x6x7x8x9x8x7;
   7x8x9x10x11x10x9x8;
   4x5x6x7x8x9x6;
   6x7x8x9x10x9x8x7; and
   7x8x9x10x9x8x7x6.

10. A pneumatic tyre according to claim 1, characterised in that the windings of each said wire array are disposed side-by-side along a direction inclined at an angle $\alpha$ of from 5 to 25 degrees with respect to the tyre axial direction.

11. A pneumatic tyre according to claim 1, characterised in that the windings of each said wire array (L) are disposed side-by-side along a direction being substantially parallel with the bead bottom.

# Fig.1

# Fig.2

## Fig.3(A)

## Fig.3(B)

Fig.4(A)

Fig.4(B)

Fig.4(C)

Fig.4(D)

Fig.4(E)

Fig.4(F)

Fig.4(G)

Fig.5(A)

Fig.5(D)

Fig.5(B)

Fig.5(E)

Fig.5(C)

Fig.5(F)

# Fig.6